# EUROPÄISCHE PATENTSCHRIFT

(11) **EP 2 975 747 B1**
(45) Veröffentlichungstag und Bekanntmachung des Hinweises auf die Patenterteilung: **18.09.2019**
(21) Anmeldenummer: 14177677.3
(22) Anmeldetag: 18.07.2014
(51) Int. Cl.: H02M 1/15

(54) **Verbessern einer Spannung einer Stromversorgungsverbindung**
Improvement of a voltage of a power supply connection
Amélioration d'une tension d'une liaison d'alimentation en courant

(43) Veröffentlichungstag der Anmeldung: 20.01.2016
(73) Patentinhaber: Siemens Aktiengesellschaft, 80333 München (DE)
(72) Erfinder: Bauer, Franz, 91074 Herzogenaurach (DE); Künzel, Stefan, 91056 Erlangen (DE)

(56) Entgegenhaltungen:
- EP-A1- 2 194 629
- DE-A1-102005 041 936
- DE-C2- 4 441 214
- FR-A1- 2 991 833
- GB-A- 2 248 981

## Beschreibung

Die Erfindung betrifft eine Filtervorrichtung zum Verbessern einer Spannung einer Stromversorgungsverbindung. Die Filtervorrichtung weist einen Stützkondensator, einen Zweiquadrantensteller und eine Steuerschaltung zum Erzeugen mindestens eines ersten Steuersignals für den Zweiquadrantensteller auf. Der Zweiquadrantensteller weist einen Stützspannungsanschluss auf, der mit dem Stützkondensator verbunden ist. Außerdem weist der Zweiquadrantensteller einen Wechselspannungsanschluss zum Parallelschalten mit der Stromversorgungsverbindung auf. Die Steuerschaltung ist dazu vorbereitet, das erste Steuersignal unter Berücksichtigung eines ersten Wechselspannungsanteils der Spannung der Stromversorgungsverbindung zu erzeugen. Der Zweiquadrantensteller kann ein Synchronwandler sein. Die Stromversorgungsverbindung kann beispielsweise ein Ausgang einer Spannungsversorgungsvorrichtung, ein Zwischenkreis und/oder ein Ausgang eines Gleichrichters sein.

Außerdem betrifft die Erfindung eine Spannungsversorgungsvorrichtung mit einer Stromversorgungsverbindung. Die Spannungsversorgungsvorrichtung kann beispielsweise einen Gleichrichter aufweisen, der die Stromversorgungsverbindung direkt oder über eine Zwischenkreisdrossel speist. Alternativ oder zusätzlich kann die Spannungsversorgungsvorrichtung einen Wechselrichter aufweisen, der an der Stromversorgungsverbindung angeschlossen ist.

Des Weiteren betrifft die Erfindung ein Verfahren zum Verbessern einer Spannung einer Stromversorgungsverbindung, wobei das Verfahren folgende Schritte aufweist. In einem ersten Schritt wird ein erster bandpassgefilterter Wechselspannungsanteil der Spannung der Stromversorgungsverbindung ermittelt. In einem zweiten Schritt wird ein erstes Steuersignal unter Berücksichtigung des ersten bandpassgefilterten Wechselspannungsanteils erzeugt. In einem dritten Schritt wird die Spannung der Stromversorgungsverbindung mittels eines Zweiquadrantenstellers in eine Stützspannung zum Laden eines Stützkondensators gleichgerichtet, der an dem Zweiquadrantensteller angeschlossen ist. In einem vierten Schritt wird die Stützspannung mittels des Zweiquadrantenstellers in einen Stützstrom wechselgerichtet. In einem fünften Schritt wird der Stützstrom in die Stromversorgungsverbindung eingespeist, um damit zumindest teilweise zu einer Kompensation des ersten Wechselspannungsanteils auf der Stromversorgungsverbindung beizutragen.

Die DE 10 2005 041 936 A1 beschreibt eine Kompensationseinheit, die einen Speicherkondensator, eine Stelleinheit, eine Aufbereitungsschaltung mit einem Bandpassfilter, eine Stromregeleinheit und eine Regeleinheit aufweist.

Die GB 2 248 981 A beschreibt einen Dämpfungsschaltkreis mit einem Kondensator und einem Zweiquadrantensteller. Der Zweiquadrantensteller wird von einem Pulsweitenmodulator über einen Gate-Ansteuerungsschaltkreis gesteuert. Der Pulsweitenmodulator wird über einen Kompensationsblock, der einen Proportional-Integral-Algorithmus aufweist, von einem Signal angesteuert, das eine Differenz zwischen einem aktuellen Ausgangsstrom des Zweiquadrantenstellers und einem erwünschten Dämpfungsstrom darstellt.

Die EP 2 194 629 A1 beschreibt eine Störstromkompensationseinrichtung mit einer Regelungseinrichtung, die einen Bandpassfilter aufweist, mit dem ein unerwünschter Wechselspannungsanteil, der auf einer Stromversorgungsleitung vorhanden ist, extrahiert wird, wobei aus dem unerwünschten Wechselspannungsanteil ein Kompensationsstromvorgabewert abgeleitet wird. Die Störstromkompensationseinrichtung weist einen magnetisierbaren Ring auf, der einen Stromversorgungsleiter umschließt. Mittels Magnetisierens des magnetisierbaren Rings wird in dem Stromversorgungsleiter eine Kompensationsspannung erzeugt. Zum Magnetisieren des magnetisierbaren Rings wird ein Kompensationsstrom in die Magnetisierungsspule eingespeist, der mittels einer Umrichtereinheit in Abhängigkeit des Kompensationsstromvorgabewerts erzeugt wird.

Bei Speisung eines Zwischenkreises mittels eines ungesteuerten Gleichrichters entsteht unter Last eine Harmonische, die aus Anwendungssicht besonders störend ist. Die Ordnung der besonders störenden Harmonischen (d.h. der Vervielfachungsfaktor gegenüber der Grundfrequenz) entspricht typischerweise der Anzahl der Gleichrichterzweige. Beispielsweise ist bei einem Sechspulsgleichrichter B6 die Frequenz einer besonders störenden Harmonischen sechs mal so hoch wie die Netzgrundfrequenz. Bei Versorgung des Gleichrichters aus einem 50-Hz-Netz ist dies ein Wechselspannungsanteil mit 300 Hz. Bei geregelten, hochdynamischen Antrieben kann eine solche Harmonische aus folgendem Grund besonders störend sein. Aufgrund eines zeitlichen Verzugs zwischen Messung der Zwischenkreisspannung und dem Stellen einer Verstärkung des motorseitigen Wechselrichters gelingt es in der Praxis (auch unter Berücksichtigung der Zwischenkreisspannung als weitere Regelgröße) nicht in zufriedenstellendem Umfang, eine Abbildung der Harmonischen auf das Drehmoment zu vermeiden, das vom elektrischen Antriebsmotor erzeugt wird.

Um solche störenden Wechselspannungsanteile in der Spannung der Stromversorgungsverbindung zu beseitigen, kann grundsätzlich erwogen werden, der Stromversorgungsverbindung einen Serienschwingkreis parallel zu schalten, dessen Resonanzfrequenz auf die störende Harmonische abgestimmt ist. Bei idealisierter Betrachtung stellt so ein Serienschwingkreis für die störende Harmonische einen verlustfreien Kurzschluss dar, sodass diese Harmonische in der Spannung der Stromversorgungsverbindung (der der Serienschwingkreis parallelgeschaltet ist) nicht mehr vorhanden ist. Aufgrund des netzseitigen Spannungsverlaufs und des Schaltverhaltens des Gleichrichters wird der Spannungsanteil der störenden Harmonischen so allerdings nicht völlig aus der Welt geschaffen, sondern in einen anderen Schaltungsteil verdrängt. Dieser Schaltungsteil ist typischerweise eine Zwischenkreisdrossel. Aber auch dieses Schaltungskonzept hat Nachteile. Um zur Unterdrückung der störenden Harmonischen einen Serienschwingkreis mit einer ausreichenden Schwingkreisgüte zu schaffen, müsste eine Induktivität mit einem ausreichenden Induktivitätswert und einem ausreichenden ohmschen Leitwert bereitgestellt werden. Außerdem tritt in einem solchen Serienschwingkreis bei Resonanz eine Spannungsüberhöhung auf, welche besondere Anforderungen an die Spannungsfestigkeit der Kapazität des Serienschwingkreises stellt.

Die in der DE 44 41 214 C2 vorgeschlagene aktive Filtervorrichtung vermeidet diese Nachteile. Um aufwendige Glättungsmittel (wie raumfordernde Drosseln und Glättungskondensatoren) zu vermeiden, wird hier vorgeschlagen, Wechselanteile (die einer Gleichspannung überlagert sind) mittels einer Anordnung aus einem Zweiquadrantensteller und einem Stützkondensator, der an einem Stützspannungseingang des Zweiquadrantenstellers angeschlossen ist, zu unterdrücken. Diese bekannte Filtervorrichtung ist für eine Unterstützung oder einen Ersatz eines Glättungskondensators einer Gleichstromversorgung vorgesehen. Bei zu großer Zwischenkreisspannung nimmt der Kondensator Energie auf, speichert sie zwischen und gibt sie bei zu niedriger Zwischenkreisspannung wieder ab. Die Funktionsweise dieser bekannten aktiven Filtervorrichtung wird in der Figurendetailbeschreibung erläutert.

Ausgehend von diesem Stand der Technik ist es unter einem ersten Aspekt eine Aufgabe der vorliegenden Erfindung, eine Filtervorrichtung bereitzustellen, mit der eine (aus Anwendungssicht gleichwertige) Verringerung der Welligkeit einer Zwischenkreisspannung mit geringerem Gesamtaufwand als mit der bekannten aktiven Filterschaltung erreicht werden kann.

Unter einem zweiten Aspekt ist es eine Aufgabe der vorliegenden Erfindung, eine Filtervorrichtung bereitzustellen, mit der einer Schwingungsneigung eines Zwischenkreises entgegengewirkt werden kann. Der Beweggrund hierfür ist wie folgt. Kommutierungsdrosseln und/oder Zwischenkreisdrosseln bilden zusammen mit einem Zwischenkreiskondensator typischerweise einen dämpfungsarmen Schwingkreis. Der Wechselrichter eines hochdynamischen Antriebs verhält sich aus Sicht des Zwischenkreises typischerweise wie eine Konstantleistungssenke, die den dämpfungsarmen Zwischenkreis destabilisiert. Das Konstantleistungsverhalten des Wechselrichters hat zur Folge, dass der Zwischenkreisstrom bei sinkender Zwischenkreisspannung steigt und bei steigender Zwischenkreisspannung sinkt. Dieses Verhalten entspricht dem Verhalten eines negativen Widerstands, der zu einer Entdämpfung des Zwischenkreises führt. Die Folge ist, dass der Zwischenkreis oberhalb einer bestimmten Leistung zu Eigenschwingungen (freien Schwingungen) angeregt wird.

Die unter dem ersten und zweiten Aspekt definierten Aufgaben werden erfindungsgemäß durch eine Filtervorrichtung zum Verbessern einer Spannung einer Stromversorgungsverbindung gelöst. Die Filtervorrichtung weist einen Stützkondensator, einen Zweiquadrantensteller und eine Steuerschaltung zum Erzeugen mindestens eines ersten Steuersignals für den Zweiquadrantensteller auf. Der Zweiquadrantensteller weist einen Stützspannungsanschluss auf, der mit dem Stützkondensator verbunden ist. Außerdem weist der Zweiquadrantensteller einen Wechselspannungsanschluss zum Parallelschalten mit der Stromversorgungsverbindung auf. Die Steuerschaltung ist dazu vorbereitet, das erste Steuersignal unter Berücksichtigung eines ersten Wechselspannungsanteils der Spannung der Stromversorgungsverbindung zu erzeugen. Die Steuerschaltung weist einen ersten Bandpassfilter zum Filtern des ersten Wechselspannungsanteils der Spannung der Stromversorgungsverbindung auf. Der Durchlassfrequenzbereich des ersten Bandpassfilters ist auf eine Resonanzfrequenz der Stromversorgungsverbindung abgestimmt. Unter Bandpassfilter wird hier ein ('echtes') Bandpassfilter verstanden, das eine untere Grenzfrequenz aufweist, die größer als 0 Hz ist, und eine obere Grenzfrequenz aufweist, die nicht im Unendlichen liegt. Um eine Dämpfungswirkung optimal zu erzielen, kann ein Durchlassfrequenzbereich des ersten Bandpassfilters auf eine Resonanzfrequenz der Stromversorgungsverbindung (beispielsweise auf eine Resonanzfrequenz eines Zwischenkreises) abgestimmt werden.

Entsprechend weist eine erfindungsgemäße Spannungsversorgungsvorrichtung mit einer Stromversorgungsverbindung eine erfindungsgemäße Filtervorrichtung auf.

Das erfindungsgemäße Verfahren zum Verbessern einer Spannung einer Stromversorgungsverbindung umfasst folgende Schritte. In einem ersten Schritt wird ein erster bandpassgefilterter Wechselspannungsanteil der Spannung der Stromversorgungsverbindung mittels eines ersten Bandpassfilters ermittelt, wobei ein Durchlassfrequenzbereich des ersten Bandpassfilters auf eine Resonanzfrequenz der Stromversorgungsverbindung abgestimmt ist. In einem zweiten Schritt wird ein erstes Steuersignal unter Berücksichtigung des ersten bandpassgefilterten Wechselspannungsanteils erzeugt. In einem dritten Schritt wird die Spannung der Stromversorgungsverbindung mittels eines Zweiquadrantenstellers in eine Stützspannung zum Laden eines Stützkondensators gleichgerichtet, der an dem Zweiquadrantensteller angeschlossen ist. In einem vierten Schritt wird die Stützspannung mittels des Zweiquadrantenstellers in einen Stützstrom wechselgerichtet. In einem fünften Schritt wird der Stützstrom in die Stromversorgungsverbindung eingespeist, um damit zumindest teilweise zu einer Kompensation des ersten Wechselspannungsanteils auf der Stromversorgungsverbindung beizutragen. Der zumindest teilweise zu kompensierende erste Wechselspannungsanteil kann beispielsweise aus einer unerwünschten Eigenschwingung der Stromversorgungsverbindung (beispielsweise eines Zwischenkreises resultieren).

Typischerweise ist eine Induktivität des Zweiquadrantenstellers mit dem Stützkondensator in Reihe geschaltet (lediglich zu Unterscheidungszwecken wird für diese Induktivität im übrigen Text der Begriff 'Wandlerinduktivität' verwendet). Die Wandlerinduktivität dient dazu, (unter Zuhilfenahme der Schaltvorgänge des Zweiquadrantenstellers) den Tastgrad in eine Stärke eines tastgradabhängigen Stützstroms abzubilden, mit der die Stromversorgungsverbindung beaufschlagt wird. Energie kann sowohl in der Wandlerinduktivität als auch in dem Stützkondensator gespeichert sein. Diese Reihenschaltung (welche im Folgenden als Energiespeicherkreis bezeichnet wird) bildet einen Serienschwingkreis. Die Taktfrequenz des Pulsweitenmodulators ist typischerweise erheblich höher als die Resonanzfrequenz des Energiespeicherkreises.

Ausgehend von der bekannten aktiven Filtervorrichtung kann ein Konzept der Erfindung darin gesehen werden, dass das erste Steuersignal zur Steuerung des Zweiquadrantenstellers unter Berücksichtigung eines Wechselspannungsanteils erzeugt wird, der mittels einer Bandpassfilterung aus der Spannung der Stromversorgungsverbindung ermittelt wird. Hierdurch werden vorhandene Ressourcen zur Verbesserung der Spannung der Stromversorgungsverbindung (d.h. der Stützkondensator und der Zweiquadrantensteller) gezielt zum Bedämpfen des Zwischenkreises genutzt und/oder gezielt zum Verringern genau derjenigen Wechselspannungsanteile der Spannung der Stromversorgungsverbindung genutzt, die aus Anwendungssicht besonders störend sind. Umgekehrt ausgedrückt, werden durch das erfindungsgemäße Konzept vorhandene Ressourcen zur Verbesserung der Spannung der Stromversorgungsverbindung (d.h. der Stützkondensator und der Zweiquadrantensteller) von einem Verringern solcher Wechselspannungsanteile entlastet, die aus Anwendungssicht weniger störend sind. So wird eine Filtervorrichtung zum Verbessern einer Spannung einer Stromversorgungsverbindung bereitgestellt, die zielgenauer an eine Kompensation und/oder Dämpfung besonders störender Wechselspannungsanteils angepasst ist und deshalb bei gleichem Anwendungsnutzen raumsparender, gewichtssparender und kostengünstiger in Herstellung und/oder Betrieb ist als die bekannte aktive Filtervorrichtung. Die Filtervorrichtung kann auch für einen Zwischenkreis verwendet werden, der mit einer nichtlinearen Zwischenkreisdrossel bestückt ist.

Eine erste mögliche Anordnung der Spannungsversorgungsvorrichtung sieht vor, dass der Zweiquadrantensteller einem Spannungsversorgungsausgang der Spannungsversorgungsvorrichtung parallelgeschaltet ist. Mit dieser Anordnung des Zweiquadrantenstellers kann unter dem zweiten Aspekt der Erfindung erreicht werden, dass der Zweiquadrantensteller effizient und verlässlich in den Zwischenkreis dämpfend eingreift. In dieser Anordnung hat die erste Filtervorrichtung die Funktion eines aktiven Siebkondensators (dies ist eine übliche Bezeichnung für den zweiten oder einen weiteren Kondensator einer Siebkette).

Eine zweite mögliche Anordnung der Spannungsversorgungsvorrichtung sieht vor, dass die Spannungsversorgungsvorrichtung einen Gleichrichter mit einem Gleichrichterausgang aufweist, wobei der Zweiquadrantensteller dem Gleichrichterausgang parallelgeschaltet ist und dass zwischen einem Anschluss des Zweiquadrantenstellers an dem Gleichrichterausgang und einem Spannungsversorgungsausgang der Spannungsversorgungsvorrichtung eine Zwischenkreisdrossel angeordnet ist. Diese Anordnung des Zweiquadrantenstellers in der Spannungsversorgungsvorrichtung ist insbesondere unter dem ersten Aspekt der Erfindung zweckmäßig. Denn hiermit kann erreicht werden, dass die Zwischenkreisdrossel von vorneherein gar nicht erst mit einem Wechselstromanteil der störenden Harmonischen belastet wird. In dieser Anordnung hat die Filtervorrichtung die Funktion eines aktiven Ladekondensators (dies ist eine übliche Bezeichnung für den ersten Kondensator einer Siebkette). Eine so angeordnete Filtervorrichtung und/oder ein Ladekondensator kann vorteilhafterweise dazu genutzt werden, den Strom durch eine Zwischenkreisdrossel in einem Lückbetrieb aufrechtzuerhalten (d.h. in Zeiten, in denen der Gleichrichter elektrisch isoliert). Auch kann so eventuell ein Notbetrieb aufrechterhalten bleiben, wenn eine Netzphase ausfällt.

Aus den genannten Gründen kann es besonders zweckmäßig sein, beide Anordnungen gleichzeitig vorzusehen, also zu kombinieren. Dazu wird (beispielsweise zur Bereitstellung eines konstanten Stroms durch die Zwischenkreisdrossel) eine erste erfindungsgemäße Filtervorrichtung in der ersten Anordnung vorgesehen und (beispielsweise zum Bedämpfen des Zwischenkreises) eine zweite erfindungsgemäße Filtervorrichtung in der zweiten Anordnung vorgesehen. Eine besonders bevorzugte Ausführungsform sieht eine Steuerschaltung mit drei Reglern vor. Ein erster dieser drei Regler hat einen rückgekoppelten I-Anteil und umfasst ein erstes Bandpassfilter, das zum Dämpfen auf eine Resonanzfrequenz des Zwischenkreises abgestimmt ist. Der zweite dieser drei Regler hat eine lineare Verstärkung und umfasst ein weiteres Bandpassfilter, das zum Stützen der Zwischenkreisspannung auf das Sechsfache einer Netzgrundfrequenz abgestimmt ist. Der dritte dieser drei Regler hat einen D-Anteil sowie eine Bewertung des D-Anteils und umfasst ein zweites Bandpassfilter, das zum Dämpfen des Energiespeicherkreises auf eine Resonanzfrequenz des Energiespeicherkreises abgestimmt ist.

Eine zweckmäßige Ausführungsform der Filtervorrichtung sieht vor, dass die Steuerschaltung einen Pulsweitenmodulator aufweist. Mittels eines Pulsweitenmodulators kann eine analoge Stellgröße für den jeweiligen Zweiquadratensteller in bewährter Weise in einen zeitlichen Ablauf diskreter Schaltstellungen des jeweiligen Zweiquadrantenstellers abgebildet werden.

Zweckmäßig ist, wenn die Steuerschaltung einen zweiten Bandpassfilter zum Filtern eines zweiten Wechselspannungsanteils der Spannung der Stromversorgungsverbindung aufweist und dazu vorbereitet ist, das erste Steuersignal unter Berücksichtigung des zweiten Wechselspannungsanteils zu erzeugen. Hierdurch kann dieselbe Filtervorrichtung zum Verringern einer zweiten Wechselspannungskomponente in der Spannung der Stromversorgungsverbindung genutzt werden oder neben einem Verringern einer ersten Wechselspannungskomponente in der Spannung der Stromversorgungsverbindung auch zum Verringern einer Schwingungsneigung des Zwischenkreises genutzt werden.

Es kann vorteilhaft sein, wenn der zweite Bandpassfilter auf eine Resonanzfrequenz einer Reihenschaltung einer Wandlerinduktivität des Zweiquadrantenstellers mit dem Stützkondensator abgestimmt ist. Die Steuerschaltung kann also dazu vorbereitet sein, einen in der Stromversorgungsverbindung durch Eigenschwingungsneigung des Energiespeicherkreises verursachten Wechselspannungsanteil mittels Beeinflussung des Schaltverhaltens des Zweiquadrantenstellers zu verringern.

Es hat Vorteile, wenn die Steuerschaltung zur Berücksichtigung des ersten bandpassgefilterten Wechselspannungsanteils (insbesondere zur Verfolgung eines ersten Optimierungsziels) einen ersten Regler aufweist, der zu mindestens einer der folgenden Arten von Reglern gehört: Zweipunktregler, Dreipunktregler, P-Regler, PI-Regler, PID-Regler, PD-Regler. Unabhängig davon ist es bevorzugt, wenn die Steuerschaltung zur Berücksichtigung des zweiten bandpassgefilterten Wechselspannungsanteils (insbesondere zur Verfolgung eines zweiten Optimierungsziels) einen zweiten Regler aufweist, der zu mindestens einer der folgenden Arten von Reglern gehört: Zweipunktregler, Dreipunktregler, P-Regler, PI-Regler, PID-Regler, PD-Regler. Mittels der genannten Regler kann erreicht werden, dass die Steuerschaltung ein Regelverhalten aufweist, das zu einer Verbesserung der Spannung der Stromversorgungsverbindung beiträgt. Durch Auswahl des jeweiligen Reglertypen und Einstellung seiner Reglerparameter kann das Regelverhalten der Steuerschaltung so konfiguriert werden, dass sie ein erste und/oder ein zweites vorgegebenes Optimierungsziel in bestmöglicher Weise erreicht. Hierbei sollte für den jeweiligen Regler darauf geachtet werden, dass Stabilitätskriterien erfüllt sind (beispielsweise das Stabilitätskriterium von Nyquist). Optional kann die Filtervorrichtung dafür vorgesehen sein, drei Optimierungsziele gleichzeitig zu verfolgen, beispielsweise erstens eine Zwischenkreisstützung, zweitens eine Zwischenkreisdämpfung und drittens eine Dämpfung einer Eigenschwingung der Filtervorrichtung.

Die Steuerschaltung kann dazu vorbereitet sein, eine Phasenlage des ersten bandpassgefilterten Wechselspannungsanteils zumindest teilweise anhand von Nulldurchgängen mindestens einer Netzspannung zu ermitteln und/oder dadurch zu ermitteln, dass festgestellt wird, wann die Spannung der Stromversorgungsverbindung eine vorbestimmte erste Vergleichsspannung überschreitet und/oder eine vorbestimmte zweite Vergleichsspannung unterschreitet. Anhand der Information über die Phasenlage des ersten bandpassgefilterten Wechselspannungsanteils kann die Steuerschaltung eine optimale Soll-Phasenlage für den Stützstrom ermitteln. Alternativ oder zusätzlich können entsprechende Maßnahmen auch für den zweiten bandpassgefilterten Wechselspannungsanteil von Vorteil sein.

Außerdem kann die Steuerschaltung dazu vorbereitet sein, eine Amplitude des ersten bandpassgefilterten Wechselspannungsanteils zumindest teilweise anhand einer Drehmomentbedarfsinformation und/oder anhand einer Strommessung zu ermitteln, die an einer Netzleitung, an einem Gleichrichterausgang und/oder an einer Zwischenkreisdrossel durchgeführt wird. Anhand der Information über die Amplitude des ersten und/oder des zweiten bandpassgefilterten Wechselspannungsanteils kann die Steuerschaltung eine optimale Soll-Amplitude für den Stützstrom ermitteln. Alternativ oder zusätzlich können entsprechende Maßnahmen auch für den zweiten bandpassgefilterten Wechselspannungsanteil von Vorteil sein.

Besonders vorteilhaft kann sein, wenn die Steuerschaltung dazu vorbereitet ist, bei der Erzeugung des ersten Steuersignals eine Phasenlage und/oder eine Amplitude und/oder einen aktuellen Wert einer aktuellen Stützspannung des Stützkondensators zu berücksichtigen. Hierdurch kann beispielsweise erreicht werden, dass die Steuerschaltung bei der Bestimmung des aktuellen Tastgrads für den Hochsetzbetrieb eine Abhängigkeit der Wirkung einer Änderung des Tastgrads von der Stützspannung vorausschauend berücksichtigt und/oder dass die Steuerschaltung bei der Bestimmung des aktuellen Tastgrads für den Tiefsetzbetrieb eine Abhängigkeit der Wirkung einer Änderung des Tastgrads von der Spannungsdifferenz zwischen der Spannung der Stromversorgungsverbindung und der Stützspannung vorausschauend berücksichtigt.

Auch kann es zweckmäßig sein, wenn ein dritter Frequenzbereich des ersten bandpassgefilterten Wechselspannungsanteils und/oder ein vierter Frequenzbereich des zweiten bandpassgefilterten Wechselspannungsanteils eine Resonanzfrequenz eines Eingangskreises der Spannungsversorgungsvorrichtung umfasst. Alternativ oder zusätzlich kann es auch zweckmäßig sein, wenn ein fünfter Frequenzbereich des ersten bandpassgefilterten Wechselspannungsanteils und/oder ein sechster Frequenzbereich des zweiten bandpassgefilterten Wechselspannungsanteils eine Resonanzfrequenz eines Zwischenkreises der Spannungsversorgungsvorrichtung umfasst. Die Steuerschaltung kann also dazu vorbereitet sein, einen Wechselspannungsanteil in der Stromversorgungsverbindung, der durch eine Eigenschwingungsneigung des eines Eingangskreises und/oder durch eine Eigenschwingungsneigung eines Zwischenkreises verursacht wird, mittels Beeinflussung des Schaltverhaltens des Zweiquadrantenstellers zu verringern.

Die Erfindung ist anhand der beigefügten Zeichnungen näher erläutert, in denen zeigen:
- FIG 1: schematisch ein Antriebssystem mit einer Drehstromquelle, einem Gleichstromverbraucher und einer Spannungsversorgungsvorrichtung, die eine Filtervorrichtung zum Verbessern einer Spannung einer Stromversorgungsverbindung aufweist,
- FIG 2: schematisch einen zeitlichen Verlauf von Netzströmen für ein erstes Ausführungsbeispiel der Filtervorrichtung, wobei die Filtervorrichtung für eine Zwischenkreisstützung vorgesehen ist,
- FIG 3: für das erste Ausführungsbeispiel schematisch einen zeitlichen Verlauf eines Drosselstroms, eines Stützstroms und eines Umrichterstroms,
- FIG 4: für das erste Ausführungsbeispiel schematisch einen zeitlichen Verlauf einer Zwischenkreisspannung,
- FIG 5: für das erste Ausführungsbeispiel schematisch einen zeitlichen Verlauf einer Spannung an einem Stützkondensator,
- FIG 6: für das erste Ausführungsbeispiel schematisch einen zeitlichen Verlauf eines Drehmoments,
- FIG 7: schematisch einen zeitlichen Verlauf von Netzströmen für ein zweites Ausführungsbeispiel der Filtervorrichtung, wobei die Filtervorrichtung für eine Zwischenkreisdämpfung vorgesehen ist,
- FIG 8: für das zweite Ausführungsbeispiel schematisch einen zeitlichen Verlauf eines Drosselstroms und eines Stützstroms,
- FIG 9: für das zweite Ausführungsbeispiel schematisch einen zeitlichen Verlauf einer Zwischenkreisspannung,
- FIG 10: für das zweite Ausführungsbeispiel schematisch einen zeitlichen Verlauf einer Spannung an einem Stützkondensator,
- FIG 11: für das zweite Ausführungsbeispiel schematisch einen zeitlichen Verlauf von Motorströmen,
- FIG 12: für das zweite Ausführungsbeispiel schematisch einen zeitlichen Verlauf eines Drehmoments,
- FIG 13: schematisch ein Ablaufdiagramm eines Verfahrens zum Verbessern einer Spannung einer Stromversorgungsverbindung.

Die nachfolgend näher geschilderten Ausführungsbeispiele stellen bevorzugte Ausführungsformen der vorliegenden Erfindung dar.

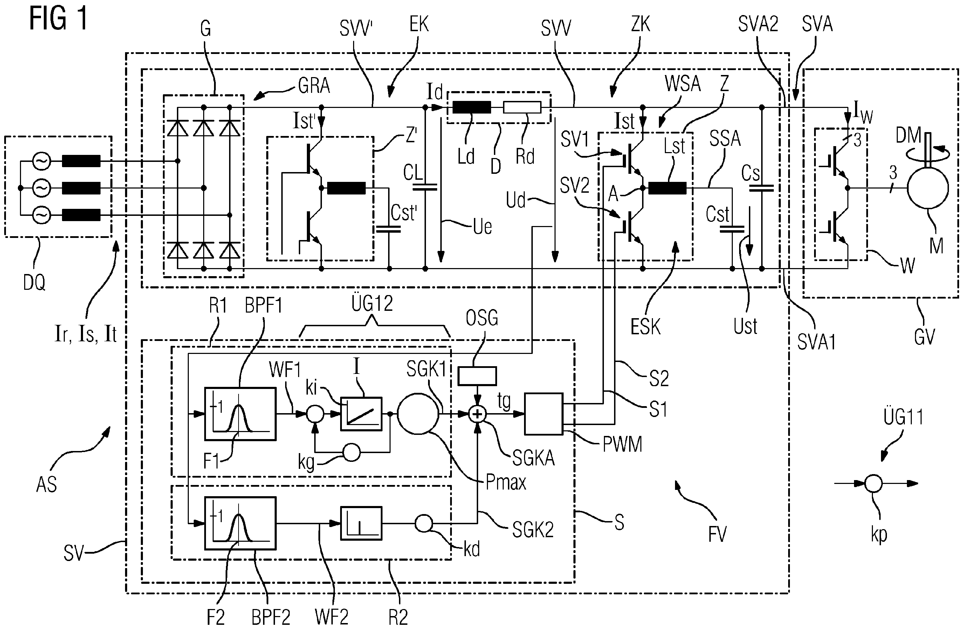

Die FIG 1 zeigt ein Antriebssystem AS mit einer Drehstromquelle DQ (mit Netzdrosseln), einer Spannungsversorgungsvorrichtung SV (zum Bereitstellen einer Zwischenkreisspannung Ud an einem Spannungsversorgungsausgang SVA) und einem Gleichstromverbraucher GV. Der Gleichstromverbraucher GV umfasst einen Drehstrom-Wechselrichter W und einen Drehstrommotor M, der an dem Drehstrom-Wechselrichter W angeschlossen ist.

Die Spannungsversorgungsvorrichtung SV umfasst eine Sechspuls-Gleichrichterbrücke G, einen Zweiquadrantensteller Z, einen weiteren Zweiquadrantensteller Z', eine Zwischenkreisdrossel D, einen Ladekondensator CL, einen Siebkondensator Cs und eine Steuerschaltung S. Das Ersatzschaltbild der Zwischenkreisdrossel D ist eine Reihenschaltung aus einer Drosselinduktivität Ld und einem ohmschen Widerstand Rd der Zwischenkreisdrossel D.

Der Zweiquadrantensteller Z ist als Synchronwandler ausgeführt und weist eine Serienschaltung aus einem ersten steuerbaren Stromventil SV1 mit einem ersten Steuereingang und aus einem zweiten steuerbaren Stromventil SV2 mit einem zweiten Steuereingang auf. Zwischen den beiden Stromventilen SV1, SV2 ist ein Abgriff A angeordnet. Zwischen dem Abgriff A und einem Stützspannungsanschluss SSA des Zweiquadrantenstellers Z ist eine Wandlerinduktivität Lst angeordnet. An dem Stützspannungsanschluss SSA des Zweiquadrantenstellers Z ist ein Stützkondensator Cst angeschlossen. Ein zweiter Anschluss des Stützkondensators Cst ist mit einem ersten Pol SVA1 des Spannungsversorgungsausgangs SVA verbunden. Die Wandlerinduktivität Lst des Zweiquadrantenstellers Z und der Stützkondensator Cst sind in Reihe geschaltet. Die Reihenschaltung aus diesen beiden Schaltungskomponenten Lst, Cst wird im Folgenden als Energiespeicherkreis ESK bezeichnet. Energie kann sowohl in der Wandlerinduktivität Lst als auch in dem Stützkondensator Cst gespeichert werden. Dem ersten SV1 und zweiten SV2 steuerbaren Stromventil ist jeweils eine (in der Figur nicht explizit dargestellte) Diode parallelgeschaltet, die für die Wandlerinduktivität Lst in Freilaufrichtung angeordnet ist.

Im Folgenden wird die Wirkungsweise des Zweiquadrantenstellers Z beschrieben. Die Beschreibung gilt analog auch für den weiteren Zweiquadrantensteller Z'. Die beiden Stromventile SV1, SV2 sind beispielsweise Transistoren, die in Serie geschaltet sind, und von einem Pulsweitenmodulators PWM im Gegentakt angesteuert werden.

In einer ersten Taktphase wird an den Energiespeicherkreis ESK mittels eines ersten Transistors SV1 die Zwischenkreisspannung Ud angelegt. Hierdurch kann sich der erste Stützkondensator Cst etwas aufladen. Hierbei begrenzt die Wandlerinduktivität Lst die Geschwindigkeit des Ansteigens des Ladestroms. Die erste Taktphase kann als Teil eines Tiefsetzbetriebes angesehen werden (in der eingangs genannten Druckschrift ist diesbezüglich nur die in der Tabelle ausgewiesene Zuordnung fehlerfrei). In einer zweiten Taktphase sind beide Transistoren SV1, SV2 gesperrt. Die Wandlerinduktivität Lst sorgt dafür, dass der Ladestrom, der sich mittlerweile aufgebaut hat, über eine zweite Freilaufdiode, die dem zweiten Transistor SV2 parallelgeschaltet ist, noch eine kurze Zeit weiterfließt. Nach Ablauf einer ersten Mindestpausenzeit wird in einer dritten Taktphase der Energiespeicherkreis ESK mittels des zweiten Transistors SV2 kurzgeschlossen. Hierdurch kann sich der Stützkondensator Cst etwas entladen. Die Wandlerinduktivität Lst begrenzt die Geschwindigkeit des Ansteigens des Entladestroms. Die vierte Taktphase kann als Teil eines Hochsetzbetriebes angesehen werden. In einer vierten Taktphase sind beide Transistoren SV1, SV2 gesperrt. Die Wandlerinduktivität Lst sorgt dafür, dass der Entladestrom, der sich mittlerweile aufgebaut hat, über eine erste Freilaufdiode, die dem ersten Transistor SV1 parallelgeschaltet ist, noch eine kurze Zeit weiterfließt. Nach Ablauf einer zweiten Mindestpausenzeit wird der periodische Ablauf mit einer weiteren ersten Taktphase fortgesetzt.

Aus dem Wirkprinzip ergibt sich, dass für diese Art von Zweiquadrantensteller (in der FIG 1 nicht dargestellte) Freilaufdioden erforderlich sind, die den Transistoren SV1, SV2 parallelgeschaltet sind. Als Freilaufdioden können (soweit sie in den Transistoren SV1, SV2 überhaupt vorhanden sind) Bulk-Dioden der Transistoren SV1, SV2 verwendet werden (sofern deren Schaltverhalten, Strombelastbarkeit und Durchlassverhalten überhaupt als gut genug angesehen wird).

Eine Verlängerung des Zeitanteils des Durchschaltens des ersten Transistors SV1 (d.h. eine Verlängerung des Zeitanteils der ersten Phase) bewirkt tendenziell eine Verringerung der Spannung Ud der Stromversorgungsverbindung SVV. Eine Verlängerung des Zeitanteils des Durchschaltens des zweiten Transistors SV2 (d.h. eine Verlängerung des Zeitanteils der dritten Phase) bewirkt tendenziell eine Erhöhung der Spannung Ud an der Stromversorgungsverbindung SVV, wobei dies voraussetzt, dass der Stützkondensator Cst noch positive Ladung aufweist.

Die Richtung des mittleren Leistungsflusses (Nettoleistungsflusses) zwischen dem Zwischenkreis ZK und dem Energiespeicherkreis ESK wird durch den aktuellen Tastgrad tg (also durch ein Zeitverhältnis zwischen der ersten und der dritten Taktphase) bestimmt.

Im Regelfall ist zu unterstellen, dass dem Stützkondensator Cst auf keinem anderen Weg Energie zugeführt wird. Daraus folgt, dass der Nettoleistungsfluss (also der Leistungsfluss ohne Betrachtung der oben erwähnten Verluste) langfristig null Watt betragen muss.

Aus dem Wirkprinzip dieser Art von Zweiquadrantensteller Z ergibt sich, dass sich eine Veränderung des Tastgrads tg (beispielsweise um plus 10%) auf die Änderung der Spannung Ud der Stromversorgungsverbindung SVV unterschiedlich auswirkt, je nachdem wie hoch die Stützspannung Ust an dem Stützkondensator Cst aktuell ist. Für den Tiefsetzbetrieb ist die Wirkung einer Veränderung des Tastgrads tg von der Spannungsdifferenz (Ud - Ust) zwischen der Spannung Ud der Stromversorgungsverbindung SVV und der Stützspannung Ust abhängig. Denn diese Spannungsdifferenz bestimmt (neben der Zeit der ersten Taktphase und dem Wert der Wandlerinduktivität Lst) die Energie, die in der ersten Taktphase in das Magnetfeld der Wandlerinduktivität Lst gepumpt wird. Für den Hochsetzbetrieb ist die Wirkung einer Veränderung des Tastgrads tg von der Stützspannung Ust abhängig. Denn die Stützspannung Ust bestimmt (neben der Zeit der dritten Taktphase und dem Wert der Wandlerinduktivität Lst) die Energie, die in der dritten Taktphase in das Magnetfeld der Wandlerinduktivität Lst gepumpt wird).

Zur Verbesserung des Regelverhaltens kann eine erste Weiterbildung der Steuerschaltung SV ausgehend von einer Messung und/oder Vorhersage der Stützspannung Ust (und optional auch zusätzlich ausgehend von einer Messung und/oder Vorhersage der Spannung Ud der Stromversorgungsverbindung SVV) diese Abhängigkeiten der Wirkung einer Änderung des Tastgrads tg in der Bestimmung des Tastgrads tg vorausschauend berücksichtigen. Hierbei sollte darauf geachtet werden, dass Stabilitätskriterien erfüllt sind.

Entsprechend kann eine zweite Weiterbildung berücksichtigen, dass sich eine Veränderung des Tastgrads tg (beispielsweise um plus 10%) je nach Zustand und/oder Lastverhalten des Gleichstromverbrauchers GV unterschiedlich auf die Änderung der Spannung Ud der Stromversorgungsverbindung SVV auswirkt. Zur Verbesserung des Regelverhaltens kann vorgesehen sein, dass die Steuerschaltung SV ausgehend von einer Messung oder Vorhersage eines aktuellen und/oder zukünftigen Zustands und/oder eines aktuellen und/oder zukünftigen Lastverhaltens des Gleichstromverbrauchers GV diese Abhängigkeit der Wirkung einer Änderung des Tastgrads tg in der Bestimmung des Tastgrads tg vorausschauend berücksichtigt. Auch hier sollte darauf geachtet werden, dass Stabilitätskriterien erfüllt sind.

Der Pulsweitenmodulator PWM wird mittels eines ersten Reglers R1 so gesteuert, dass der aktuelle Stützstrom zwischen dem Zwischenkreis ZK und dem Energiespeicherkreis ESK in Phase und Stärke (soweit möglich) gerade so bemessen ist, dass störende Wechselanteile WF1 in der Zwischenkreisspannung Ud wirksam unterdrückt werden.

Der erste Regler R1 umfasst einen ersten Bandpassfilter BPF1 zum Herausfiltern eines ersten Wechselspannungsanteils WF1 aus der Zwischenkreisspannung Ud. Außerdem umfasst der erste Regler R1 ein erstes Übertragungsglied ÜG11 oder ÜG12. Dem ersten Übertragungsglied ÜG11 bzw. ÜG12 wird der herausgefilterte erste Wechselspannungsanteil WF1 zugeführt. Die Eigenschaften des ersten Übertragungsglieds ÜG11 bzw. ÜG12 werden in einer folgenden Betrachtung von Simulationsergebnissen erläutert. Das erste Übertragungsglied ÜG11 bzw. ÜG12 stellt an seinem Ausgang eine erste Stellgrößenkomponente SGK1 bereit.

Der zweite Regler R2 umfasst einen zweiten Bandpassfilter BPF2 zum Herausfiltern eines zweiten Wechselspannungsanteils WF2 aus der Zwischenkreisspannung Ud. Außerdem umfasst der zweite Regler R2 ein zweites Übertragungsglied ÜG2, dem der herausgefilterte zweite Wechselspannungsanteil WF2 zugeführt wird. Das zweite Übertragungsglied ÜG2 hat ein Übertragungsverhalten eines PD-Reglers (oder eines Zweipunktreglers, eines Dreipunktreglers, eines P-Reglers, eines PI-Reglers, eines PID-Reglers oder eines PD-Reglers). Der in der FIG 1 dargestellte zweite Regler R2 ist ein D-Regler mit einem Differenzierbeiwert Kd. Das zweite Übertragungsglied ÜG2 stellt an seinem Ausgang eine zweite Stellgrößenkomponente SGK2 bereit.

Außerdem weist die Steuerschaltung S einen Stellgrößenkomponenten-Addierer SGKA auf, dem die erste SGK1 und die zweite SGK2 Stellgrößenkomponente zugeführt wird. Um im Mittel einen gleich großes Spiel für den Beladungshub wie für den Entladungshub zu erhalten, kann dem Stellgrößenkomponenten-Addierer SGKA als weiterer Summand auch eine Offset-Stellgröße OSG für einen Soll-Tastgrad (mittleres Soll-Pulsweitenverhältnis) zugeführt werden. Die Offset-Stellgröße OSG beträgt vorzugsweise etwa 50%.

Eine besonders bevorzugte Ausführungsform sieht eine Steuerschaltung mit drei Reglern R1', R1" und R2 vor. Der erste R1' dieser drei Regler hat einen rückgekoppelten I-Anteil und umfasst ein erstes Bandpassfilter BPF1', das zum Dämpfen auf eine Resonanzfrequenz des Zwischenkreises ZK abgestimmt ist. Der zweite R1" dieser drei Regler hat eine lineare Verstärkung (kp-Verstärkung) und umfasst ein weiteres Bandpassfilter BPF1", das zum Stützen der Zwischenkreisspannung Ud auf das Sechsfache einer Netzgrundfrequenz abgestimmt ist. Der dritte R2 dieser drei Regler hat einen D-Anteil sowie eine Bewertung des D-Anteils mit kd und umfasst ein zweites Bandpassfilter BPF2, das zum Dämpfen des Energiespeicherkreises ESK auf die Resonanzfrequenz FResk des Energiespeicherkreises ESK abgestimmt ist.

Die FIG 1 zeigt schematisch auch einen weiteren Zweiquadrantensteller Z' der (ohne Zwischenschaltung der Zwischenkreisdrossel D) zum Gleichrichterausgang GRA direkt parallelgeschaltet ist. Der Gleichrichterausgang GRA stellt also für den weiteren Zweiquadrantensteller Z' seine Stromversorgungsverbindung SVV' dar, deren Eingangsspannung Ue er verbessert. Sofern der weitere Zweiquadrantensteller Z' überhaupt vorhanden ist, ist ihm eine (in den Figuren nicht dargestellte) weitere Steuerschaltung zugeordnet, die typischerweise nach gleichen Konzepten aufgebaut ist, wie sie für die erste Steuerschaltung S erläutert sind. Die weitere Steuerschaltung braucht aber weder strukturell noch funktionell baugleich zur ersten Steuerschaltung S sein. Es sind Spannungsversorgungsschaltungen möglich, in denen nur der erste Zweiquadrantensteller Z, nur der weitere Zweiquadrantensteller Z' oder (wie in FIG 1 gezeigt) beide Zweiquadrantensteller Z, Z' (mit jeweiligen Steuerschaltungen) vorhanden sind. In keinem der beiden simulierten Ausführungsbeispiele, die im Folgenden betrachtet werden, ist der optionale weitere Zweiquadrantensteller Z' oder optionale Ladekondensator CL vorhanden.

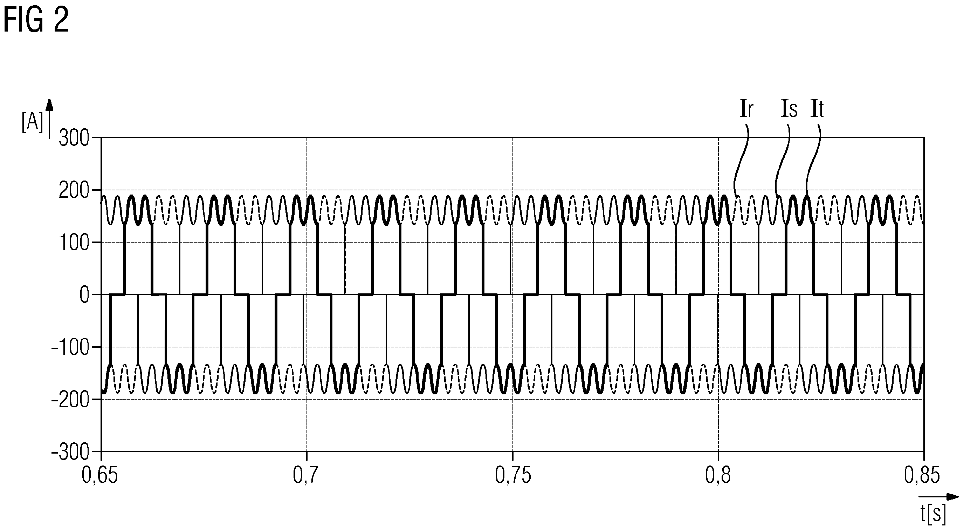

Die FIG 2 bis 12 zeigen für das erste und das zweite Ausführungsbeispiel Simulationsergebnisse für ein Antriebssystem AS, das mit folgenden Komponenten modelliert wurde: 400V/50Hz-Netz DQ, Gleichrichter G, Zwischenkreis ZK mit Zwischenkreisdrossel D, Motorstromrichter W mit einer zugehörigen dynamischen Vektorregelung, feldorientiert betriebene Norm-Asynchronmaschine 55 kW, erfindungsgemäße Filtervorrichtung FV. In beiden simulierten Ausführungsbeispielen umfasst die Bandbreite des zweiten Bandfilters BF2 eine Resonanzfrequenz FResk des Energiespeicherkreises ESK.

Die FIG 2 zeigt einen zeitlichen Verlauf von Netzströmen Ir, Is, It für ein erstes Ausführungsbeispiel der Filtervorrichtung FV zur Zwischenkreisstützung mit einem Zweiquadrantensteller Z und einem ersten Regler R1. Für das erste simulierte Ausführungsbeispiel wurde eine Netzinduktivität von 39 µH und eine Zwischenkreisdrossel D mit einem ohmschen Widerstand von null Ohm unterstellt.

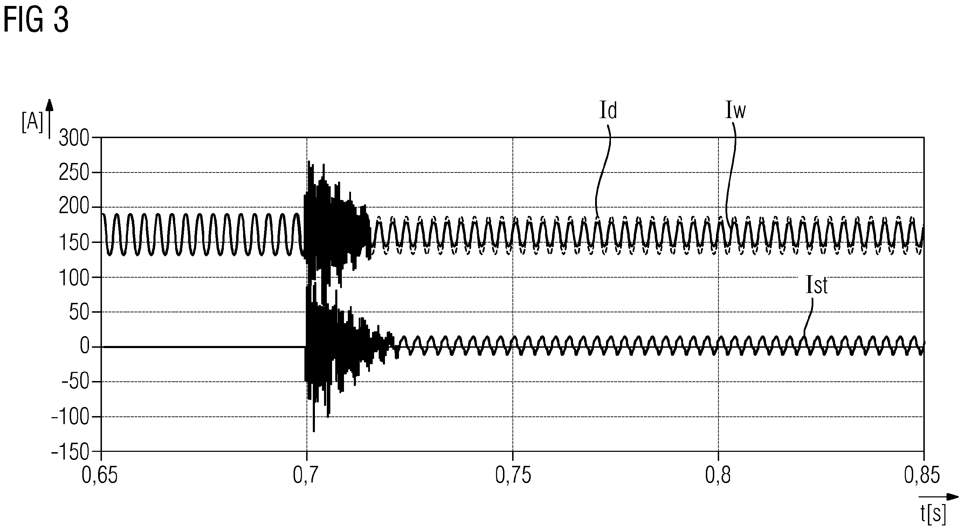

Die FIG 3 zeigt für das erste Ausführungsbeispiel schematisch einen zeitlichen Verlauf eines Drosselstroms Id und eines Stützstroms Ist.

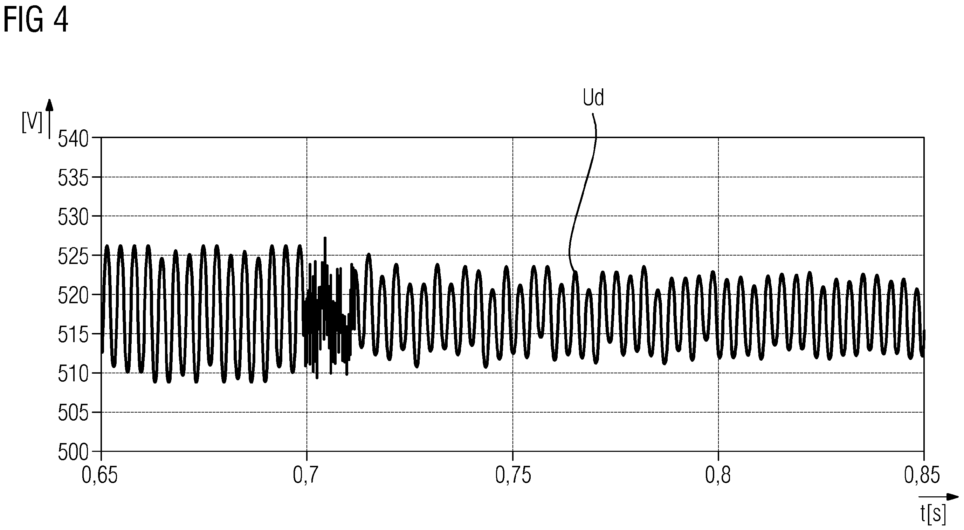

Die FIG 4 zeigt für das erste Ausführungsbeispiel schematisch einen zeitlichen Verlauf der Zwischenkreisspannung Ud.

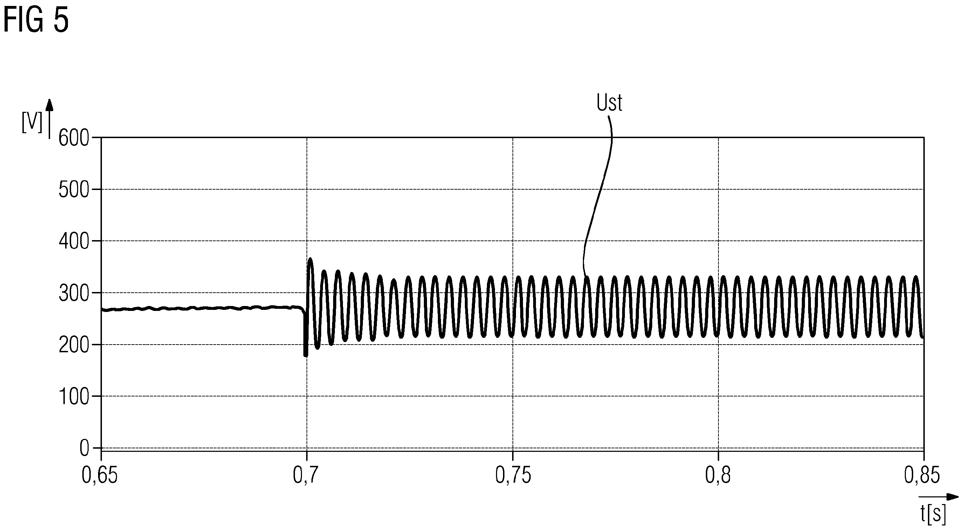

Die FIG 5 zeigt für das erste Ausführungsbeispiel schematisch einen zeitlichen Verlauf einer Spannung Ust an dem Stützkondensator Cst.

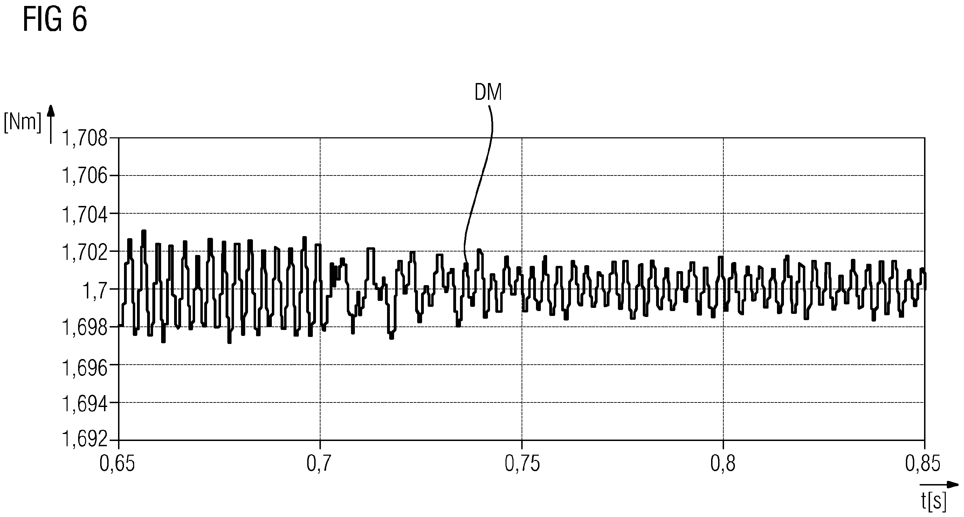

Die FIG 6 zeigt für das erste Ausführungsbeispiel schematisch einen zeitlichen Verlauf eines Drehmoments DM des Drehstrommotors M.

In der Simulation des ersten Ausführungsbeispiels wurde der Drehstrommotor M zunächst bei 1,7-fachem Nennmoment bei 0,8-facher Nenndrehzahl (Zwischenkreisleistung ca. 84 kW) ohne Filtervorrichtung FV betrieben. Für die Zwischenkreisdrossel D wurde ein ohmscher Widerstand von Rd = 0,13 Ohm unterstellt.

Die Zwischenkreisspannung Ud enthält die bekannte 300-Hz-Welligkeit, ebenso der Zwischenkreisstrom Id. Die Vektorregelung des Motors M arbeitet mit einer Abtastzeit von 500 µs. Die Kompensation der Zwischenkreisspannung Ud erfolgt mit kurz vor der Modulation ermittelten Messwerten und ist hier somit schon optimal gelöst. Dennoch ist eine Welligkeit im Drehmoment DM deutlich zu erkennen.

Nach Zuschalten der Filtervorrichtung FV bei t = 0,7s wird die Welligkeit in den Zwischenkreisgrößen und im Drehmoment DM etwa auf die Hälfte verringert. Wird der Faktor kp für die Wirksamkeit der Filtervorrichtung FV vergrößert, kann eine noch größere Wirkung erzielt werden. Der Hub der Stützspannung Ust nützt mit der vorhandenen Dimensionierung den Stellbereich nur zu einem geringen Teil aus. In dem Dimensionierungsbeispiel beträgt das Verhältnis Cst/Cs = 0,086. Die Kapazität des Stützkondensator Cst beträgt nur knapp 9% der Kapazität des Siebkondensators Cs. Der Stützkondensator Cst kann unter Wahrung gleicher Stützwirkung noch weiter verkleinert werden, da in dem Simulationsbeispiel nicht der volle Spannungshub genutzt wird.

Der Eingangsstrom Ie und der Drosselstrom Id bleiben durch die Zuschaltung der Filtervorrichtung FV praktisch unverändert. Beim Zuschalten der Filtervorrichtung FV (das hier 'hart' erfolgt) ist zunächst ein Einschwingen des Energiespeicherkreises ESK zu sehen, das infolge des Regelvorgangs, der vom zweiten Reglers R2 kontrolliert wird, rasch gedämpft wird. Bei einer realen Vorrichtung sollte ein weiches Aufschalten vorgesehen werden, um Einschwingvorgänge zu vermeiden, die hartes Aufschalten verursacht.

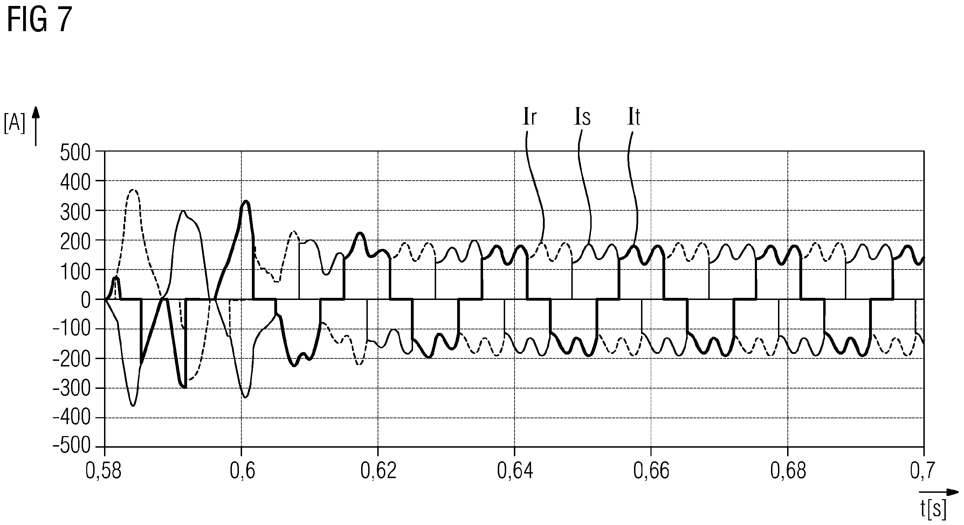

Die FIG 7 zeigt für ein zweites Ausführungsbeispiel schematisch einen zeitlichen Verlauf von Netzströmen Ir, Is, It.

In der Simulation des zweiten Ausführungsbeispiels wird die gemessene Zwischenkreisspannung Ud zunächst mit einem ersten Bandpassfilter BPF1 gefiltert, der auf eine Resonanzfrequenz FRzk des Zwischenkreises ZK abgestimmt ist. Nur solche Frequenzen sind für eine Stabilisierung des Zwischenkreises ZK von Interesse. Über einen nachgeschalteten Integrator I wird eine Änderung des Tastgrades tg realisiert. Wenn beispielsweise die Zwischenkreisspannung Ud minimal ist, wird der Tastgrad tg mit maximaler Geschwindigkeit verringert, um den Stützkondensator Cst zu entladen. Daraus folgt ein positives Vorzeichen für die Aufschaltung auf den Aussteuergrad tg. Damit der Integrator nicht davonläuft, kann er mit einem Gegenkoppelbeiwert kg so gegengekoppelt werden, dass die Grenzfrequenz deutlich unterhalb der Bandpassfrequenz des ersten Bandpasses BF1 liegt. Ein Integrator mit Gegenkopplung ist ein Integrator mit Ausgleich, also ein Proportionalglied mit Verzögerung. Der anschließende Verstärkungsfaktor Pmax bestimmt, wie stark kompensierend die Filtervorrichtung FV wirkt. Mit dem Verstärkungsfaktor Pmax kann eine maximale Zwischenkreisleistung eingestellt werden, bis zu der die Filtervorrichtung FV den Zwischenkreis ZK stabilisiert.

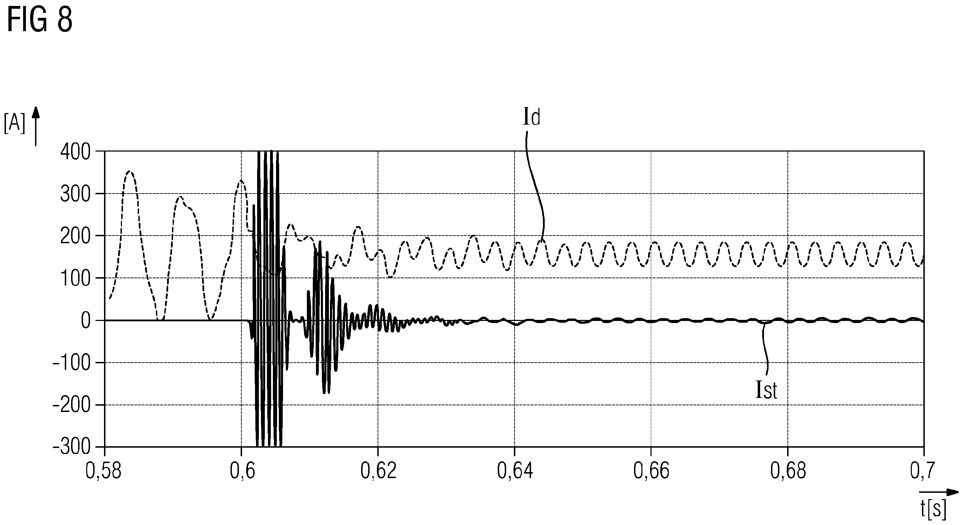

Die FIG 8 zeigt für das zweite Ausführungsbeispiel schematisch einen zeitlichen Verlauf eines Drosselstroms Id und eines Stützstroms Ist.

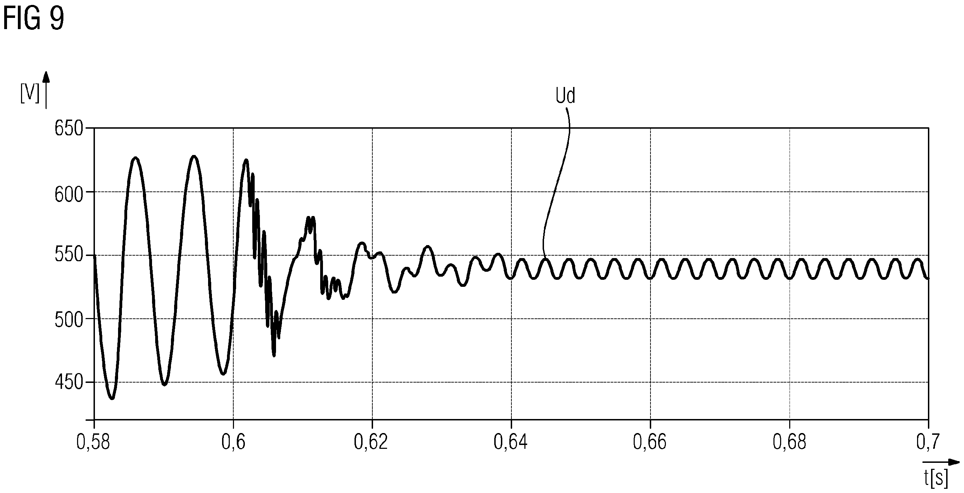

Die FIG 9 zeigt für das zweite Ausführungsbeispiel schematisch einen zeitlichen Verlauf einer Zwischenkreisspannung Ud.

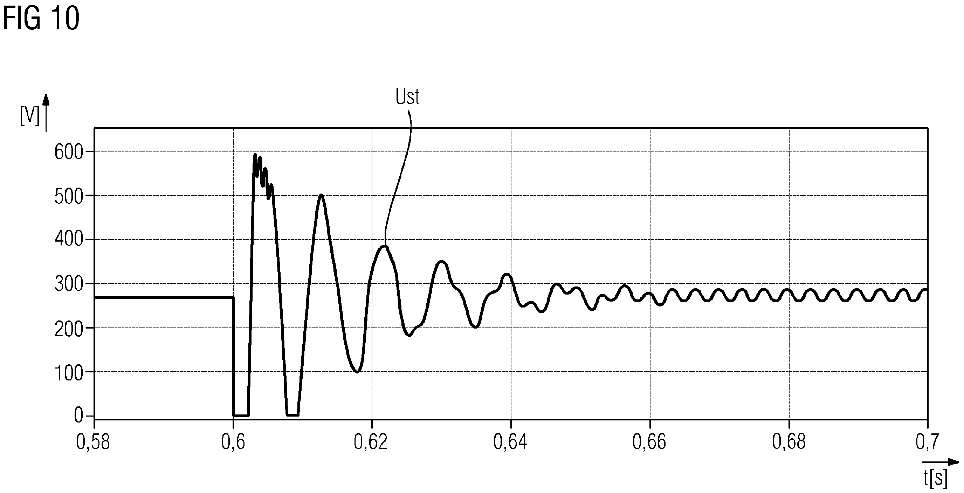

Die FIG 10 zeigt für das zweite Ausführungsbeispiel schematisch einen zeitlichen Verlauf einer Spannung Ust an einem Stützkondensator Cst.

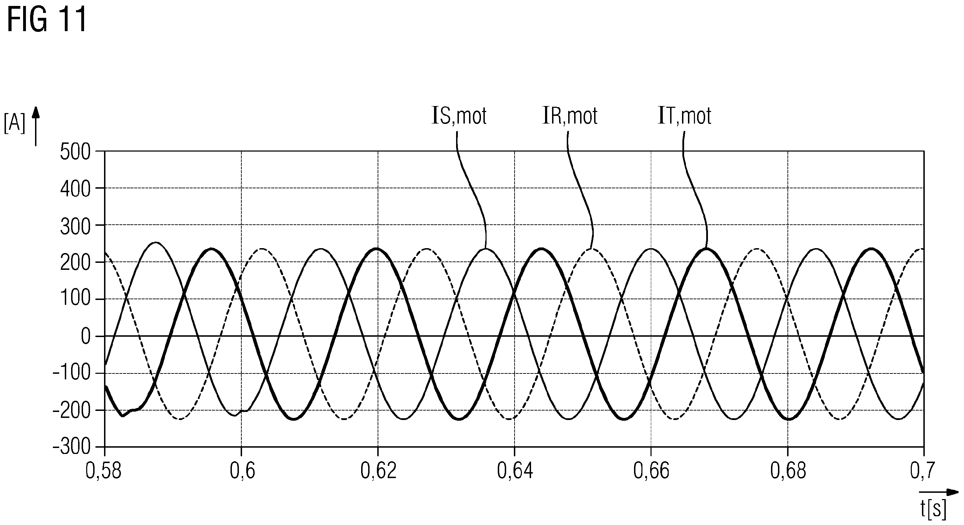

Die FIG 11 zeigt für das zweite Ausführungsbeispiel schematisch einen zeitlichen Verlauf von Motorströmen i_{R,mot}, i_{S,mot}, i_{T,mot}.

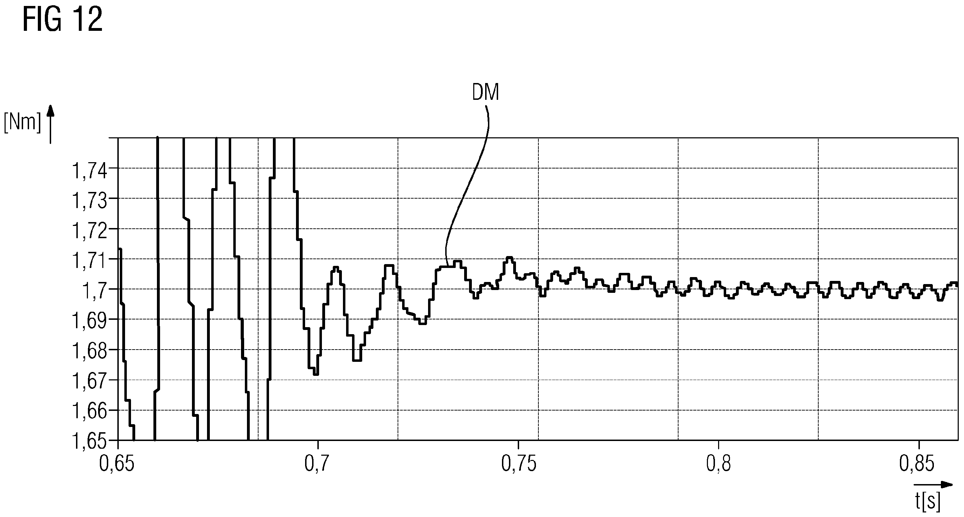

Die FIG 12 zeigt für das zweite Ausführungsbeispiel schematisch einen zeitlichen Verlauf eines Drehmoments DM.

In der Simulation des zweiten Ausführungsbeispiels wurde der Antrieb zunächst bei 1,7-fachem Nennmoment und 0,8-facher Nenndrehzahl (Zwischenkreisleistung ca. 84 kW) ohne Filtervorrichtung FV betrieben. Der Zwischenkreis ZK ist dann instabil und schwingt bis zur Lückgrenze des Eingangsstroms Id auf. Die Zwischenkreisspannung Ud schwingt derartig, dass eine Aussteuerbegrenzung des Antriebs erreicht wird und das Schwingen auch auf Motorgrößen (beispielsweise den Motorstrom und das Drehmoment DM) durchgreift.

Nach Zuschalten der Filtervorrichtung FV bei t = 0,6 s stabilisiert sich das Antriebssystem AS sehr rasch. Pmax wurde so gewählt, dass maximal 160 kW stabilisiert werden können. Lediglich die 300 Hz der Diodenspeisung sind noch in den Zwischenkreisgrößen enthalten. Mit zugeschalteter Filtervorrichtung FV verhält sich das Antriebssystem AS stabil und ohne Verlust an Dynamik und Drehmomentqualität.

Die Filtervorrichtung FV arbeitet weitgehend verlustfrei. Die Filtervorrichtung FV kann zum Dämpfen eines Zwischenkreises ZK mit Diodeneinspeisung mit Kommutierungsdrosseln am Netz oder mit Zwischenkreisdrosseln verwendet werden. Sofern eine Resonanzfrequenz der Neigung zu Eigenschwingungen bekannt ist, kann die Filtervorrichtung FV auch zum Dämpfen von Instabilitäten des Zwischenkreises ZK verwendet werden, die durch andere als die erwähnten Einflüsse oder Effekte verursacht werden.

Der Energiespeicherkreis ESK sollte möglichst ungedämpft sein, um möglichst geringe Verluste zu erzeugen. Der Energiespeicherkreis ESK bildet somit für sich genommen einen ungedämpften Serienschwingkreis, der eine Resonanzfrequenz FResk aufweist und mittels jeder Änderung des Ansteuergrads tg angeregt wird. Im gezeigten Simulationsbeispiel beträgt die Resonanzfrequenz FRzk des Zwischenkreises 130 Hz. Um den Energiespeicherkreis ESK zu bedämpfen, umfasst sowohl das erste wie auch das zweite Ausführungsbeispiel jeweils eine Vorrichtung zum Dämpfen des Energiespeicherkreises ESK. Hierzu wird mittels eines zweiten Bandpassfilters BPF2 aus der Zwischenkreisspannung Ud ein zweiter Wechselspannungsanteil WF2 herausgefiltert, der die (bekannte) Resonanzfrequenz FRes des Energiespeicherkreises ESK aufweist. Zum Dämpfen des Energiespeicherkreises ESK ist in der zweiten Steuerschaltung SV2 ein D-Regler vorgesehen, der den zweiten Wechselspannungsanteil WF2 differenziert und das Ergebnis mit einem Differenzierbeiwert kd zum Aussteuergrad addiert. Mit dem Differenzierbeiwert kd lässt sich die Dämpfungswirkung einstellen. Wenn beispielsweise die Zwischenkreisspannung Ud sinkt, fließt ein positiver Stützstrom Ist durch den Energiespeicherkreis ESK.

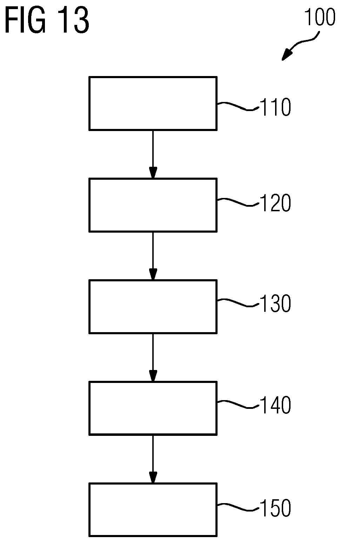

Das in FIG 13 gezeigte Verfahren 100 zum Verbessern einer Spannung Ud einer Stromversorgungsverbindung SVV umfasst folgende Schritte. In einem ersten Schritt 110 wird ein erster bandpassgefilterter Wechselspannungsanteil WF1 der Spannung Ud der Stromversorgungsverbindung SVV ermittelt. In einem zweiten Schritt 120 wird ein erstes Steuersignal SS1 unter Berücksichtigung des ersten bandpassgefilterten Wechselspannungsanteils WF1 erzeugt. In einem dritten Schritt 130 wird eine Spannung Ud der Stromversorgungsverbindung SVV mittels eines Zweiquadrantenstellers Z in eine Stützspannung Ust zum Laden eines Stützkondensators Cst gleichgerichtet, der an dem Zweiquadrantensteller Z angeschlossen ist. In einem vierten Schritt wird die Stützspannung Ust mittels des Zweiquadrantenstellers Z in einen Stützstrom Ist wechselgerichtet. In einem fünften Schritt 150 wird der Stützstrom Ist in die Stromversorgungsverbindung SVV eingespeist, um damit zumindest teilweise zu einer Kompensation des ersten Wechselspannungsanteils WF1 auf der Stromversorgungsverbindung SVV beizutragen. Eine Weiterbildung des Verfahrens 100 sieht vor, dass (beispielsweise mittels einer Verarbeitungs-Pipeline) alle oder eine beliebige Teilmenge der Verfahrensschritte ganz oder teilweise zeitlich parallel, zeitlich gestaffelt und/oder quasigleichzeitig ausgeführt wird.

Die vorliegende Erfindung beschreibt eine Filtervorrichtung FV zum Verbessern einer Spannung einer Stromversorgungsverbindung SVV. Die Filtervorrichtung FV weist einen Stützkondensator Cst, einen Zweiquadrantensteller Z und eine Steuerschaltung S zum Erzeugen 120 mindestens eines ersten Steuersignals S1 für den Zweiquadrantensteller Z auf. Der Zweiquadrantensteller Z weist einen Stützspannungsanschluss SSA auf, der mit dem Stützkondensator Cst verbunden ist. Außerdem weist der Zweiquadrantensteller Z einen Wechselspannungsanschluss WSA zum Parallelschalten mit der Stromversorgungsverbindung SVV auf. Die Steuerschaltung S ist dazu vorbereitet, das erste Steuersignal S1 unter Berücksichtigung eines ersten Wechselspannungsanteils WF1 der Spannung Ud der Stromversorgungsverbindung SVV zu erzeugen. Die Steuerschaltung S weist einen ersten Bandpassfilter BPF1 zum Filtern des ersten Wechselspannungsanteils WF1 der Spannung Ud der Stromversorgungsverbindung SVV auf.

## Patentansprüche

1. Filtervorrichtung (FV) zum Verbessern einer Spannung (Ud) einer Stromversorgungsverbindung (SVV), wobei die Filtervorrichtung (FV) aufweist:
- einen Stützkondensator (Cst);
- einen Zweiquadrantensteller (Z) mit einem Stützspannungsanschluss (SSA), der mit dem Stützkondensator (Cst) verbunden ist, und mit einem Wechselspannungsanschluss (WSA) zum Parallelschalten mit der Stromversorgungsverbindung (SVV) ;
- eine Steuerschaltung (S) zum Erzeugen (120) mindestens eines ersten Steuersignals (S1) für den Zweiquadrantensteller (Z), wobei die Steuerschaltung (S) dazu vorbereitet ist, das erste Steuersignal (S1) unter Berücksichtigung eines ersten Wechselspannungsanteils (WF1) der Spannung (Ud) der Stromversorgungsverbindung (SVV) zu erzeugen;
**dadurch gekennezeichnet**, dass die Steuerschaltung (S) einen ersten Bandpassfilter (BPF1) zum Filtern des ersten Wechselspannungsanteils (WF1) der Spannung (Ud) der Stromversorgungsverbindung (SVV) aufweist, wobei ein Durchlassfrequenzbereich des ersten Bandpassfilters (BPF1) auf eine Resonanzfrequenz (FRzk) der Stromversorgungsverbindung (SVV) abgestimmt ist.

2. Filtervorrichtung (FV) nach Anspruch 1, **dadurch gekennzeichnet, dass** die Steuerschaltung (S) einen Pulsweitenmodulator (PWM) aufweist.

3. Filtervorrichtung (FV) nach einem der vorhergehenden Ansprüche, **dadurch gekennzeichnet, dass** die Steuerschaltung (S) einen zweiten Bandpassfilter (BPF2) zum Filtern eines zweiten Wechselspannungsanteils (WF2) der Spannung (Ud) der Stromversorgungsverbindung (SVV) aufweist und dazu vorbereitet ist, das erste Steuersignal (S1) unter Berücksichtigung des zweiten Wechselspannungsanteils (WF2) zu erzeugen.

4. Filtervorrichtung (FV) nach dem vorhergehenden Anspruch, **dadurch gekennzeichnet, dass** der zweite Bandpassfilter (BPF2) auf eine Resonanzfrequenz (FResk) einer Reihenschaltung (ESK) einer Wandlerinduktivität (Lst) des Zweiquadrantenstellers (Z) mit dem Stützkondensator (Cst) abgestimmt ist.

5. Filtervorrichtung (FV) nach einem der vorhergehenden Ansprüche, **dadurch gekennzeichnet, dass** die Steuerschaltung (S) zur Berücksichtigung des ersten bandpassgefilterten Wechselspannungsanteils (WF1) einen ersten Regler (R1) aufweist, der zu mindestens einer der folgenden Arten von Reglern gehört: Zweipunktregler, Dreipunktregler, P-Regler, PI-Regler, PID-Regler, PD-Regler; und/oder dass die Steuerschaltung (S) zur Berücksichtigung des zweiten bandpassgefilterten Wechselspannungsanteils (WF2) einen zweiten Regler (R2) aufweist, der zu mindestens einer der folgenden Arten von Reglern gehört: Zweipunktregler, Dreipunktregler, P-Regler, PI-Regler, PID-Regler, PD-Regler.

6. Filtervorrichtung (FV) nach einem der vorhergehenden Ansprüche, **dadurch gekennzeichnet, dass** die Steuerschaltung (S) dazu vorbereitet ist, eine Phasenlage des ersten bandpassgefilterten Wechselspannungsanteils (WF1) zumindest teilweise anhand von Nulldurchgängen mindestens einer Netzspannung zu ermitteln und/oder dadurch zu ermitteln, dass festgestellt wird, wann die Spannung (Ud) der Stromversorgungsverbindung (SVV) eine vorbestimmte erste Vergleichsspannung überschreitet und/oder eine vorbestimmte zweite Vergleichsspannung unterschreitet, und/oder dass die Steuerschaltung (S) dazu vorbereitet ist, eine Amplitude des ersten bandpassgefilterten Wechselspannungsanteils (WF1) zumindest teilweise anhand einer Drehmomentbedarfsinformation und/oder anhand einer Strommessung zu ermitteln, die an einer Netzleitung, an einem Gleichrichterausgang (GRA) und/oder an einer Zwischenkreisdrossel (D) durchgeführt wird.

7. Filtervorrichtung (FV) nach einem der vorhergehenden Ansprüche, **dadurch gekennzeichnet, dass** die Steuerschaltung (S) dazu vorbereitet ist, bei der Erzeugung des ersten Steuersignals (S1) eine Phasenlage und/oder eine Amplitude und/oder einen aktuellen Wert einer aktuellen Stützspannung (Ust) des Stützkondensators (Cst) zu berücksichtigen.

8. Spannungsversorgungsvorrichtung (SV) mit einer Stromversorgungsverbindung (SVV), **dadurch gekennezeichnet**, dass die Spannungsversorgungsvorrichtung (SV) eine Filtervorrichtung (FV) nach einem der vorhergehenden Ansprüche aufweist.

9. Verfahren (100) zum Verbessern einer Spannung (Ud) einer Stromversorgungsverbindung (SVV):
- Ermitteln (110) eines ersten bandpassgefilterten Wechselspannungsanteils (WF1) der Spannung (Ud) der Stromversorgungsverbindung (SVV) mittels eines ersten Bandpassfilters (BPF1), wobei ein Durchlassfrequenzbereich des ersten Bandpassfilters (BPF1) auf eine Resonanzfrequenz (FRzk) der Stromversorgungsverbindung (SVV) abgestimmt ist;
- Erzeugen (120) eines ersten Steuersignals (S1) unter Berücksichtigung des ersten bandpassgefilterten Wechselspannungsanteils (WF1);
- Gleichrichten (130) der Spannung (Ud) der Stromversorgungsverbindung (SVV) mittels eines Zweiquadrantenstellers (Z) in eine Stützspannung (Ust) zum Laden eines Stützkondensators (Cst), der an dem Zweiquadrantensteller (Z) angeschlossen ist;
- Wechselrichten (140) der Stützspannung (Ust) mittels des Zweiquadrantenstellers (Z) in einen Stützstrom (Ist); und
- Einspeisen (150) des Stützstroms (Ist) in die Stromversorgungsverbindung, um damit zumindest teilweise zu einer Kompensation des ersten Wechselspannungsanteils (WF1) auf der Stromversorgungsverbindung (SVV) beizutragen.

## Claims

1. Filter apparatus (FV) for improving a voltage (Ud) of a power supply connection (SVV), wherein the filter apparatus (FV) has:
- a supporting capacitor (Cst);
- a dual-quadrant actuator (Z) with a supporting voltage terminal (SSA), which is connected to the supporting capacitor (Cst), and with an alternating voltage terminal (WSA) for parallel connection to the power supply connection (SVV);
- a control circuit (S) for generating (120) at least one first control signal (S1) for the dual-quadrant actuator (Z), wherein the control circuit (S) is provided to generate the first control signal (S1) by taking into account a first alternating voltage portion (WF1) of the voltage (Ud) of the power supply connection (SVV);
**characterised in that**
the control circuit (S) has a first bandpass filter (BPF1) for filtering the first alternating voltage portion (WF1) of the voltage (Ud) of the power supply connection (SVV), wherein a pass frequency range of the first bandpass filter (BPF1) is matched with a resonance frequency (FRzk) of the power supply connection (SVV).

2. Filter apparatus (FV) according to claim 1, **characterised in that** the control circuit (S) has a pulse width modulator (PWM).

3. Filter apparatus (FV) according to one of the preceding claims, **characterised in that** the control circuit (S) has a second bandpass filter (BPF2) for filtering a second alternating voltage portion (WF2) of the voltage (Ud) of the power supply connection (SVV) and is prepared to generate the first control signal (S1) by taking into account the second alternating voltage portion (WF2).

4. Filter apparatus (FV) according to the preceding claim, **characterised in that** the second bandpass filter (BPF2) is matched with a resonance frequency (FResk) of a series circuit (ESK) of a converter inductance (Lst) of the dual-quadrant actuator (Z) with the supporting capacitor (Cst).

5. Filter apparatus (FV) according to one of the preceding claims, **characterised in that** the control circuit (S) has a first controller (R1) for taking into account the first bandpass-filtered alternating voltage portion (WF1), which belongs to at least one of the following types of controller: two-position controller, three-position controller, P-controller, PI-controller, PID-controller, PD-controller; and/or that the control circuit (S) has a second controller (R2) for taking into account the second bandpass-filtered alternating voltage portion (WF2), said second controller belonging to at least one of the following types of controllers: two-position controller, three-position controller, P-controller, PI-controller, PID-controller, PD-controller.

6. Filter apparatus (FV) according to one of the preceding claims, **characterised in that** the control circuit (S) is prepared to determine a phase position of the first bandpass-filtered alternating voltage portion (WF1) at least partially on the basis of zero crossings of at least one mains voltage and/or as a result to determine that it is ascertained when the voltage (Ud) of the power supply connection (SVV) exceeds a predetermined first comparison voltage and/or does not reach a predetermined second comparison voltage, and/or that the control circuit (S) is prepared to determine an amplitude of the first bandpass-filtered alternating voltage portion (WF1) at least partially on the basis of an item of torque demand information and/or on the basis of a current measurement which is carried out on a mains line, on a rectifier output (GRA) and/or on an intermediate circuit throttle (D).

7. Filter apparatus (FV) according to one of the preceding claims, **characterised in that** the control circuit (S) is prepared to take into account a phase position and/or an amplitude and/or a current value of a current supporting voltage (Ust) of the supporting capacitor (Cst) when the first control signal (S1) is generated.

8. Voltage supply apparatus (SV) with a power supply connection (SVV), **characterised in that** the voltage supply apparatus (SV) has a filter apparatus (FV) according to one of the preceding claims.

9. Method (100) for improving a voltage (Ud) of a power supply connection (SVV);
- determining (110) a first bandpass-filtered alternating voltage portion (WF1) of the voltage (Ud) of the power supply connection (SVV) by means of a first bandpass filter (BPF1), wherein a pass frequency range of the first bandpass filter (BPF1) is matched to a resonance frequency (FRzk) of the power supply connection (SVV);
- generating (120) a first control signal (S1) by taking into account the first bandpass-filtered alternating voltage portion (WF1);
- rectifying (130) the voltage (Ud) of the power supply connection (SVV) by means of a dual-quadrant actuator (Z) into a supporting voltage (Ust) for charging a supporting capacitor (Cst) which is connected to the dual-quadrant actuator (Z);
- inverting (140) the supporting voltage (Ust) by means of the dual-quadrant actuator (Z) into a supporting current (Ist); and
- feeding (150) the supporting current (Ist) into the power supply connection, in order thus to contribute at least partially to compensating for the first alternating voltage portion (WF1) on the power supply connection (SVV).

## Revendications

1. Système (FV) de filtrage pour améliorer une tension (Ud) d'une liaison (SVV) d'alimentation en courant, le système (FV) de filtrage comportant :
- un condensateur (Cst) de secours ;
- un régleur (Z) à deux cadrans ayant une borne (SSA) de tension de secours, qui est connectée au condensateur (Cst) de secours, et ayant une borne (WSA) de tension alternative pour le montage en parallèle avec la liaison (SVV) d'alimentation en courant ;
- un circuit (S) de commande pour produire (120) au moins un premier signal (S1) de commande du régleur (Z) à deux cadrans, le circuit (S) de commande étant prévu pour produire le premier signal (S1) de commande en tenant compte d'une première proportion (WF1) de tension alternative de la tension (Ud) de la liaison (SVV) d'alimentation en courant ;
**caractérisé en ce que** le circuit (S) de commande a un premier filtre (BPF1) passe-bande pour filtrer la première proportion (WF1) de tension alternative de la tension (Ud) de la liaison (SVV) d'alimentation en courant, une bande de fréquence passante du premier filtre (BPF1) passe-bande étant accordée sur une fréquence (FRzk) de résonance de la liaison (SVV) d'alimentation en courant.

2. Système (FV) de filtrage suivant la revendication 1, **caractérisé en ce que** le circuit (S) de commande a un modulateur (PWM) d'impulsion en largeur.

3. Système (FV) de filtrage suivant l'une des revendications précédentes, **caractérisé en ce que** le circuit (S) de commande a un deuxième filtre (BPF2) passe-bande pour filtrer une deuxième proportion (WF2) de tension alternative de la tension (Ud) de la liaison (SVV) d'alimentation en courant et est prévu pour produire le premier signal (S1) de commande, en tenant compte de la deuxième proportion (WF2) de tension alternative.

4. Système (FV) de filtrage suivant la revendication précédente, **caractérisé en ce que** le deuxième filtre (BPF2) passe-bande est accordé, par le condensateur (Cst) de secours, sur une fréquence (FResk) de résonance d'un circuit (ESK) série d'une inductance (Lst) de convertisseur du régleur (Z) à deux cadrans.

5. Système (FV) de filtrage suivant l'une des revendications précédentes, **caractérisé en ce que** le circuit (S) de commande a, pour tenir compte de la première proportion (WF1) de tension alternative filtrée passe-bande, un premier régleur (R1), qui appartient à au moins l'un des types suivants de régleur : régleur à deux points, régleur à trois points, régleur P, régleur PI, régleur PID, régleur PD ; et/ou **en ce que** le circuit (S) de commande a, pour tenir compte de la deuxième proportion (WF2) d'obtention alternative filtrée passe-bande, un deuxième régleur (R2), qui appartient à au moins l'un des types suivants de régleurs : régleur à deux points, régleur à trois points, régleur P, régleur PI, régleur PID, régleur PD.

6. Système (FV) de filtrage suivant l'une des revendications précédentes, **caractérisé en ce que** le circuit (S) de commande est prévu pour déterminer une position en phase de la première proportion (WF1) de tension alternative filtrée passe-bande, au moins en partie, à l'aide de passages par zéro d'au moins une tension de réseau et/ou pour déterminer qu'il est constaté quand la tension (Ud) de la liaison (SVV) d'alimentation en courant dépasse une première tension de comparaison déterminée à l'avance et/ou est inférieure à une deuxième tension de comparaison déterminée à l'avance et/ou **en ce que** le circuit (S) de commande est prévu pour déterminer une amplitude de la première proportion (WF1) de tension alternative filtrée passe-bande, au moins en partie, à l'aide d'une information de besoin de couple et/ou à l'aide d'une mesure de courant effectuée sur une ligne de réseau, sur une sortie (GRA) de redresseur et/ou sur une bobine (D) de circuit intermédiaire.

7. Système (FV) de filtrage suivant l'une des revendications précédentes, **caractérisé en ce que** le circuit (S) de commande est prévu pour, dans la production du premier signal (S1) de commande, prendre en compte une position en phase et/ou une amplitude et/ou une valeur instantanée d'une tension (Ust) de secours instantanée du condensateur (Cst) de secours.

8. Système (SV) d'alimentation en tension ayant une liaison (SVV) d'alimentation en courant, **caractérisé en ce que** le système (SV) d'alimentation en tension a un système (FV) de filtrage suivant l'une des revendications précédentes.

9. Procédé (100) d'amélioration d'une tension (Ud) d'une liaison (SVV) d'alimentation en courant, dans lequel :
- on détermine (110) une première proportion (WF1) de tension alternative filtrée passe-bande de la tension (Ud) de la liaison (SVV) d'alimentation en courant au moyen d'un premier filtre (BPF1) passe-bande, une bande de fréquence passante du premier filtre (BPF1) passe-bande étant accordée sur une fréquence (FRzk) de résonance de la liaison (SVV) d'alimentation en courant ;
- on produit (120) un premier signal (S1) de commande en tenant compte de la première proportion (WF1) de tension alternative filtrée passe-bande ;
- on redresse (130) la tension (Ud) de la liaison (SVV) d'alimentation en courant au moyen d'un régleur (Z) à deux cadrans en une tension (Ust) de secours pour charger un condensateur (Cst) de secours, qui est connecté au deuxième régleur (Z) à deux cadrans ;
- on ondule (140) la tension (Ust) de secours au moyen du régleur (Z) à deux cadrans en un courant (Ist) de secours et
- on injecte (150) le courant (Ist) de secours dans la liaison d'alimentation en courant pour contribuer ainsi, au moins en partie, à une compensation de la première proportion (WF1) de tension alternative sur la ligne (SVV) d'alimentation en courant.
